# EUROPEAN PATENT SPECIFICATION

(11) **EP 1 929 472 B1**
(45) Date of publication and mention of the grant of the patent: **24.03.2010**
(21) Application number: 06795964.3
(22) Date of filing: 08.09.2006
(51) Int. Cl.: G11B 7/09, G11B 7/135

(54) **ACTUATOR FOR AN OPTICAL SCANNING DEVICE**
AKTUATOR FÜR EINE OPTISCHE ABTASTVORRICHTUNG
COMMANDE DESTINEE A UN DISPOSITIF DE BALAYAGE OPTIQUE

(30) Priority: 16.09.2005 EP 05108559
(43) Date of publication of application: 11.06.2008
(73) Proprietor: Koninklijke Philips Electronics N.V., 5621 BA Eindhoven (NL)
(72) Inventor: ZIJP, Ferry, NL-5656 AA Eindhoven (NL); VERSCHUREN, Coen, A., NL-5656 AA Eindhoven (NL)
(74) Representative: Uittenbogaard, Frank
(86) International application number: PCT/IB2006/053173
(87) International publication number: WO 2007/031919

(56) References cited:
- EP-A1- 0 727 777
- US-A1- 2001 003 521
- US-A1- 2004 130 989
- VERSCHUREN C A ET AL: "Near field recording on first-surface write-once media with a NA=1.9 solid immersion lens" JAPANESE JOURNAL OF APPLIED PHYSICS, PART 1 (REGULAR PAPERS, SHORT NOTES & REVIEW PAPERS) JAPAN SOC. APPL. PHYS JAPAN, vol. 44, no. 5B, May 2005 (2005-05), pages 3564-3567, XP002432407 ISSN: 0021-4922 cited in the application
- ZIJP F ET AL: "Near-field read-out of a 50-GB first-surface disc with NA=1.9 and a proposal for a cover-layer-incident, dual-layer near-field system" PROCEEDINGS OF THE SPIE - THE INTERNATIONAL SOCIETY FOR OPTICAL ENGINEERING SPIE-INT. SOC. OPT. ENG USA, vol. 5380, no. 1, 2004, pages 209-223, XP002432408 ISSN: 0277-786X cited in the application

## Description

### FIELD OF THE INVENTION

The present invention relates to an actuator for an optical scanning device for scanning record carriers, in particular for scanning record carriers using evanescent coupling of radiation.

### BACKGROUND OF THE INVENTION

Optical record carriers exist in a variety of different formats with different storage capacities, with each format generally designed to be scanned by a radiation beam of a particular wavelength. For example, CDs are available, inter alia, as CD-A (CD-audio), CD-ROM (CD-read only memory) and CD-R (CD-recordable), and are designed to be scanned by means of a radiation beam having a wavelength (λ) of around 785 nm. DVDs, on the other hand, are designed to be scanned by means of a radiation beam having a wavelength of about 650 nm, and BDs are designed to be scanned by means of a radiation beam having a wavelength of about 405 nm. Generally, the shorter the wavelength, the greater the corresponding capacity of the optical record carrier e.g. a BD-format record carrier has a greater storage capacity than a DVD-format record carrier.

In order to obtain even higher data densities and greater storage capacities a particular type of high-density optical scanning device with a solid immersion lens (SIL) is used to focus a radiation beam to a scanning spot on an information layer of a record carrier. A certain size of an air gap between the exit face of the SIL and the entrance face of the record carrier, for example 25 nm, is desirable to allow evanescent coupling of the radiation beam from the SIL to the record carrier. Evanescent coupling may otherwise be referred to as frustrated total internal reflection (FTIR). Recording systems using evanescent coupling are also known as near-field systems, deriving their name from the field formed by the evanescent wave at an exit face of the SIL, which is sometimes referred to as the near field. An exemplary optical scanning device may use a radiation source which is a blue laser emitting a radiation beam having a wavelength of approximately 405nm.

During scanning of the record carrier the evanescent coupling between the exit face of the SIL and the outer face of the record carrier should be maintained. This involves maintaining the size of the gap at a desired, very small value during motion between the SIL and the record carrier. The efficiency of this evanescent coupling in general varies with a change in the size of the gap between the exit face of the SIL and the entrance face of the optical record carrier. When the gap size becomes larger than a desired gap size the coupling efficiency tends to decrease and a quality of the scanning spot will also decrease. If the scanning procedure involves reading data from the record carrier, for example, this decrease in efficiency will result in a decrease in the quality of the data being read, possibly with the introduction of errors into the data signal. Too small a gap size may result in collision of the SIL and the record carrier.

To allow control of the width of the air gap using a mechanical actuator at such small distances, a suitable control signal or gap signal is required as input for a gap servo system. As disclosed in, for example, a paper by T. Ishimoto, et al., Tech. Dig. ISOM/ODS 2002, p. 287 and a paper by F. Zijp and Y.V. Martynov, Proc. SPIE 4081 (2000) p.21, a suitable gap signal can be obtained from the light reflected from the SIL with a polarization state perpendicular to that of the forward radiation beam that is focused on the SIL. A fraction of the light becomes elliptically polarized after reflection at the SIL-air-record carrier interfaces: this effect creates the well-known Maltese cross when the reflected light is observed through a polarizer.

The gap signal is generated by integrating all the reflected light having the perpendicular polarization using polarizing optics and a radiation detector, which can be a single photodetector. The value of the gap signal is close to zero for zero gap width and increases with increasing gap width. The gap signal levels off at a maximum value when the gap width is approximately a tenth of the wavelength of the radiation beam. An alternative way to obtain a gap error signal is by changing the polarization from the linear state as emitted by the laser to a circular state by passing the laser beam through a quarter wave plate. This beam is then used to illuminate the lens. Subsequently, a part of the reflected beam is detected with a polarization state parallel to that of the initial polarization state of the laser, after passing the reflected beam through a quarter wave plate. Applying such a polarizing optical lightpath increases the lightpath efficiency from the laser to the optical record carrier as well as from the optical record carrier to the detection system. An additional advantage is a smaller feedback of radiation into the cavity of the laser. The desired gap width corresponds to a certain value of the gap signal, the set-point. The gap signal and a fixed voltage equal to the set-point are input into a comparator, e.g. a subtractor, which forms a gap error signal at its output. The gap error signal is used to control the gap servo system. The width of gap during scanning is in the order of a few tens of nanometers (e.g. 25nm +/- 1nm).

A near field optical recorder not only may need an objective lens system (e.g. an objective lens with a SIL) mounted on the moving part of the actuator, it may also be required to apply an aberration correcting means for correcting e.g. chromatic aberration or spherical aberration (see, for example, "Near Field Recording on First-surface Write-once Media with a NA=1.9 Solid Immersion Lens", C. A. Verschuren, et aL, JJAP, Vol. 44, No. 5B, 2005, pp.3564-3567).

An example of a simple and cost-effective chromatic aberration correcting element is a so-called non-periodic phase structure. The off-axis position tolerances with respect to the optical axis of the objective lens are in many cases smaller than the radial stroke over which the actuator has to move the objective lens system during tracking on a record carrier due to eccentricity of the tracks. A known solution in DVD or BD applications is to mount such optical elements on the moving part of the focus and tracking actuator. In this way a more accurate positioning of these optical elements with respect to the optical axis of the objective lens is possible. However, it increases the total mass of the moving part of the actuator, which has a detrimental effect on the actuator performance such as bandwidth and power consumption. This limits the attainable data rate of the system. As near field optical disk systems require extremely high data rates in order to read and write an entire record carrier within an acceptable amount of time, the addition of mass to the actuator is not preferable.

US 2004/0130989 discloses an optical scanning device having an actuator for driving the objective lens and a uniaxial actuator comprising an aberration-correcting device. A position detection means is provided as position detection means for the uniaxial actuator to detect a mutual displacement, which can be corrected using a uniaxial actuator controller for driving the uniaxial actuator. This increases the number of driving means as well as required sensors and controllers in the optical scanning device and can make the optical scanning system complex.

US 2001/0003521A1 discloses a lens actuator of an optical head for an optical disc drive includes a two-dimensional actuator supported by a carriage via a spring, a second lens held by the two-dimensional actuator, a slider supported by the two-dimensional actuator and floated off a turning optical disc, and a first lens held by the slider, whereby a laser beam is focused on the optical disc by means of an object lens system which includes the first lens and the second lens. The slider is supported by the two-dimensional actuator via a support having a predetermined spring constant in the focus directions while also having freedom to follow tilting of the optical disc.

It is an aim of the embodiments of the present invention to address one or more of the problems of the prior art, whether referred to herein or otherwise. It is an object of the present invention to obtain an improved scanning actuator for near-field applications without additional driving means.

### SUMMARY OF THE INVENTION

This object is achieved by providing an optical pickup actuator for an optical scanning device for scanning an optical record carrier, the optical pickup actuator comprising, an actuator base in a first section an objective lens and an solid immersion lens having an optical axis, the first section being connected to the actuator base by connection means a driving means for displacing the first section in at least a first direction parallel to the optical axis, and in a second section an optical element, the second section connected to the first section by a connecting-means comprising a resilient member having a first spring constant κ_{z} in the first direction such that a resonance frequency F_{res-z} of the second section in the first direction is smaller than a resonance frequency of the first section in the first direction such that the dynamic behavior of the second section in the first direction is decoupled from the dynamic behavior of the first section in the first direction.

Such a resilient member can decouple the dynamic behavior of the first section from the second section in one or more directions in the relevant frequency range such that a high bandwidth control of the first section can be obtained while the second section remains within the limited displacement tolerance range in for example the radial (tracking) direction without substantially affecting the dynamic behavior of the first section.

This enables a better reduction of residual errors of the actuated first section of the actuator with respect to the focus/air-gap direction and/or tracking direction. Also a reduction of power dissipation in the actuator will be possible as the moving mass is reduced at the higher frequencies required for focus/air-gap direction and/or tracking direction control. Higher scanning speeds and thus higher data rates will be possible. Hence, the invention results in a high performance optical pickup actuator to be used in an optical scanning device and optical data drive applying the same.

According to the invention such a resilient member can be a flexure such as for example a leaf spring or a wire spring.

In a preferred embodiment the resilient member further has a second spring constant κₓ in a second direction perpendicular to the first direction, **characterized in that** the first spring constant κ_{z} is smaller than the second spring constant κₓ.

By having a low spring constant in the first direction and higher spring constant in the second direction allows for a (dynamic) decoupling of the second section from the first section in the first direction. The second section may then still be (dynamically) coupled to the first section in the second direction following the displacements of the first section. This can be advantageous when the optical element in the second section is only allowed to have small positional deviations with respect to the objective lens system in this second direction and requires a tight following of the displacement in this second direction (e.g. the radial direction). The high spring constant in the second direction may be referred to as stiff i.e. the second section is following the displacements of first section, while the low spring constant in the first direction may be referred to as weak. In this embodiment the first spring constant κ_{z} is preferably less than one fifth of the second spring constant κ_{z} and even more preferably the first spring constant κ_{z} is less than one tenth of the second spring constant κₓ.

In a further preferred embodiment the optical pickup actuator is designed for scanning an optical record carrier rotating at a minimum functional rotational frequency, the second section having a mass M_{B} and the resilient member having a first spring constant κ_{z} in the first direction, with the ratio of the mass M_{B} and first spring constant κ_{z} to be such that a first resonance frequency F_{res-z} of the resilient member in the first direction is less than the minimum functional rotational frequency.

With the first resonance frequency of the second section below the, preferably minimum, functional rotational frequency of a record carrier in an optical recording system (or optical read and /or write system) ensures that the decoupling of the second section is effective in the functional frequency area in which the record carrier is to be scanned.

A further embodiment according to the invention relates to an optical pickup actuator further comprising a driving means for displacing the first section in a second direction perpendicular to the first direction, the resilient member having a spring constant κ_{z} in the first direction, a second spring constant κₓ in a second direction perpendicular to the first direction and a third spring constant κ_{y} in a third direction perpendicular to the first and second direction, such that the first spring constant κ_{z} and second spring constant κₓ are smaller than the third spring constant κ_{y}.

Such an optical pickup actuator is designed to have a dynamical decoupling of the second section in two directions (e.g. focus and radial tracking direction), while remaining stiff in the third direction (e.g. tangential direction). This decoupling in two directions enables an even better reduction of residual errors of the actuated first section of the actuator with respect to the focus/air-gap direction and/or tracking direction. Also the reduction of power dissipation in the actuator may be higher as the moving mass is reduced at the higher frequencies in two directions. Higher scanning speeds and thus higher data rates will be possible. Hence, the invention results in a high performance optical scanning device and optical data drive applying the same.

In this embodiment the first spring constant κ_{z} and second spring constant κₓ are preferably less than one fifth of the third spring constant κ_{y} and even more preferably the first spring constant κ_{z} and second spring constant κₓ are less than one tenth of the third spring constant κ_{y}.

In a further embodiment according to the invention the optical pickup actuator for scanning an optical record carrier rotating at a minimum functional rotational frequency, further comprises a driving means for displacing the first section in a second direction perpendicular to the first direction, the resilient member further having a second spring constant κₓ in a second direction different perpendicular to the first direction, such that the ratio of the mass M_{B} and second spring constant κₓ is such that a second resonance frequency Fᵣₑₛ₋ₓ of the second section in the second direction is less than the minimum functional rotational frequency.

### BRIEF DESCRIPTION OF THE DRAWINGS

These and further embodiments according to the present invention will now be described, by way of example only, with reference to the accompanying drawings, in which:
Figures 1a, 1b and 1c show an objective lens system focusing a radiation beam in air in accordance with the prior art (Fig. 1a); a lens focusing a radiation beam in a hemispherical solid immersion lens in accordance with the prior art (Fig. 1b) and a lens focusing a radiation beam in an aplanatic super-hemispherical solid immersion lens in accordance with the prior art (Fig. 1c),
Figure 2 schematically shows a near field optical scanning device in accordance with the prior art,
Figure 3 schematically shows an actuator for the objective lens system according to a first embodiment of the inventions,
Figure 4 schematically shows a detail of a connecting-means according to an embodiment of the invention,
Figure 5 schematically shows an actuator for the objective lens system according to a second embodiment of the invention,
Figures 6a and 6b schematically show an example of a part of the connecting-means according to the second embodiment of the invention with a low stiffness in the z-direction (Fig. 6a) and a low stiffness in the x-direction (Fig. 6b).

### DETAILED DESCRIPTION OF THE INVENTION

The maximum information density that can be recorded on an optical record carrier in an optical recording system scales inversely with the size of the laser spot that is focused on a scanning position on the information layer. The spot size is determined by the ratio of two optical parameters: the wavelength λ of the radiation beam forming the spot and the numerical aperture (NA) of the objective lens focusing the radiation beam. The NA of an objective lens is defined as NA= n sin (θ), where n is the refractive index of the medium in which the light is focused and θ is the half angle of the focused cone of light in that medium. It is evident that the upper limit for the NA of an objective lens that focuses in air or via air in a plane parallel plate (e.g. a flat record carrier) is in general unity.

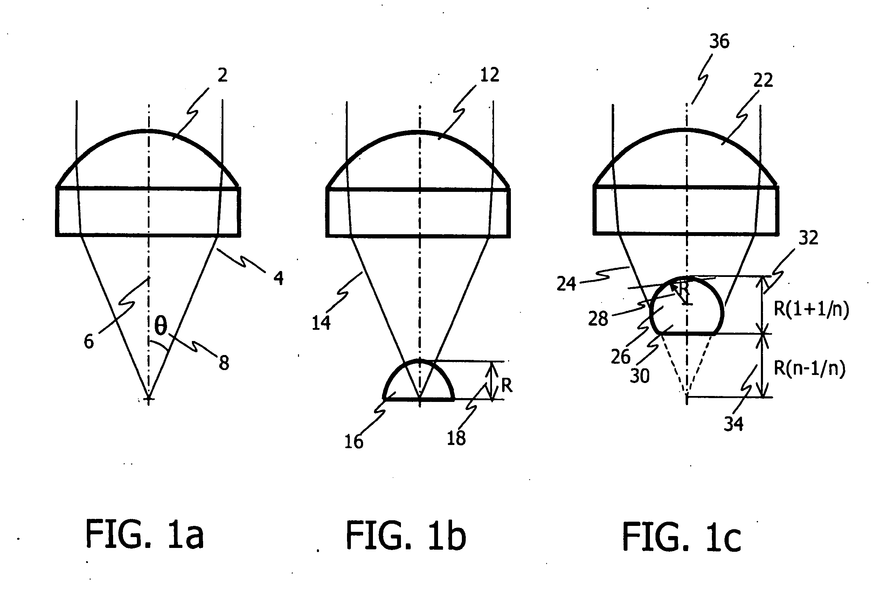

Figure 1a shows an example of a lens 2 focusing a radiation beam 4 in air, where the half angle of the focused cone of light is θ, shown as item 8, and the optical axis is shown as a dashed-dotted line 6. The NA of a lens can exceed unity if the light is focused in a high index medium without refraction at the air-medium interface, for example by focusing in the center of a hemispherical SIL. Figure 1b shows an example of a lens 12 focusing a radiation beam 14 through such a hemispherical SIL 16 with a radius R, shown as arrow 18. In this case the effective NA is NA_{eff}= n NA₀ with n the refractive index of the hemispherical lens and NA₀ the NA in air of the focusing lens.

A possibility to further increase the NA is by use of an aplanatic super-hemispherical SIL. Figures 1c shows an example of a lens 22 focusing a radiation beam 24 through such an aplanatic super-hemispherical SIL 26 of radius R, indicated by arrow 28, in which the super-hemispherical SIL 26 refracts the beam 30 towards the optical axis 36 and focuses it below the center of the super-hemisphere. In this case the effective NA is NA_{eff}=n² NA₀. For an aplanatic super-hemispherical SIL of height R(1+1/n) along the optical axis, indicated by arrow 32, the beam can be focused at a distance R(n-1/n), indicated by arrow 34, closer to lens 2 than the case in Figure 1a with no SIL.

Importantly, an effective NA_{eff} larger than unity is only present within an extremely short distance (also called the near-field) from the exit surface of the SIL, where an evanescent wave exists. The exit surface of the objective system is the last refractive surface of the objective system before the radiation impinges on the record carrier. The short distance is typically smaller than one tenth of the wavelength of the radiation.

When an entrance face of an optical record carrier is arranged within this short distance, radiation is transmitted from the SIL to the record carrier by evanescent coupling. This means that during writing or reading of an optical record carrier, the distance between the SIL and record carrier, or the gap width, should be smaller than a few tens of nanometers, for example about 25 nm for a system using a blue laser as radiation source and an NA of the objective system of 1.9. In a so-called air-incident optical record carrier, one side of the information layer is in contact with a substrate and the other side is exposed to the environment. The entrance face of such a record carrier is the interface between the information layer and the environment. Alternatively, the information layer is protected from the environment by a thin transparent layer, the outer surface of which forms the entrance face of the record carrier. In the latter case the thickness of the SIL must be corrected for the thickness of the transparent layer.

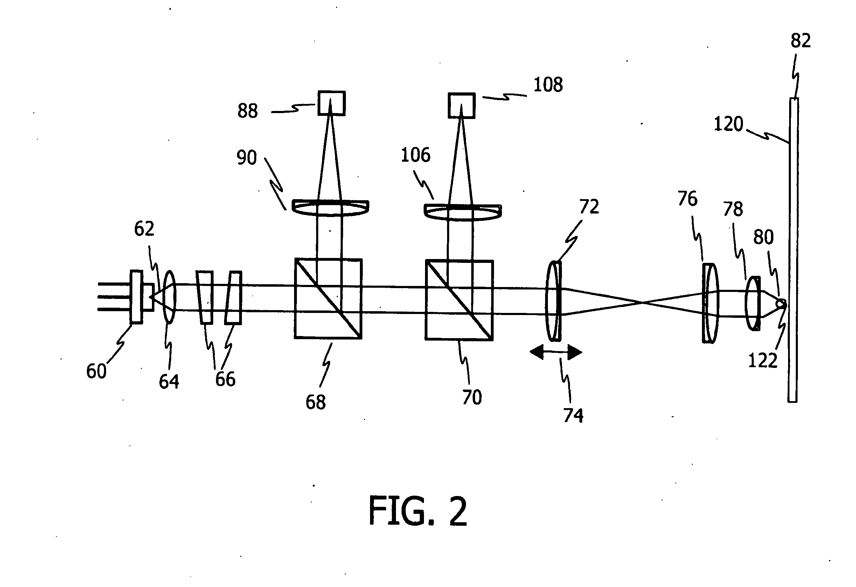

Figure 2 shows schematically an example of a near field optical scanning device for scanning a record carrier in accordance with the prior art (F. Zijp, et al., "Near field read-out of a 50GB first surface record carrier with NA=1.9 and a proposal for a cover-layer incident, dual-layer near field system", ODS2004, Proc. SPIE, Vol. 5380, p.209). The optical scanning device comprises a radiation source system, which is arranged to generate radiation. In this embodiment the radiation source is a laser 60 emitting a radiation beam 62 having a predetermined wavelength λ, for example approximately 405nm. During both a start-up procedure and a record carrier scanning procedure of the optical scanning device, the radiation beam 62 passes along an optical axis (not indicated) of the optical scanning device and is collimated by a collimator lens 64 and its cross-sectional intensity distribution shaped by a beam shaper 66. The radiation beam 62 then passes through a non-polarizing beam splitter 68, followed by a polarizing beam splitter 70 and has a focus introduced between a first focus adjustment lens 72 and a second focus adjustment lens 76.

An optimal adjustment of a focus position of the radiation beam 62 on the record carrier is achieved by moving the first focus adjustment lens 72 in a focus adjustment direction 74. An objective lens system of the optical scanning device comprises an objective lens 78 that introduces a focusing wavefront into the radiation beam 62. The objective lens system further comprises a solid immersion lens (SIL) 80. In this example the SIL 80 has a conical super-hemispherical shape as in Figure 1c, which has a NA of 1.9. The planar side of the SIL forms an exit face facing a record carrier 82.

A supporting frame (not shown) ensures that an alignment and a separation distance of the objective lens 78 with the SIL 80 are maintained. The supporting frame is kept at the correct distance from the record carrier by a gap servo system (not shown). After the introduction of the focusing wavefront by the objective lens system, the radiation beam forms a radiation beam spot on the record carrier 82. The radiation beam that falls onto lens 78 has a linear polarization. An alternative way to obtain a gap error signal is by changing the polarization from the linear state as emitted by the laser to a circular state by passing the laser beam through a quarter wave plate. This beam is then used to illuminate lens 78. Subsequently, a part of the reflected beam is detected with a polarization state parallel to that of the initial polarization state of the laser, after passing the reflected beam through a quarter wave plate.

The record carrier 82 has an entrance face 120 that faces the SIL 80 exit face 122. The objective system is arranged between the radiation source 60 and the record carrier 82 and a gap between the exit face 122 and the entrance face 120 has a gap size that is the distance between the exit face 122 and the entrance face 120 along the optical axis.

In a first optical detection path there is arranged a first condenser lens 106 for focusing a detection radiation beam onto a first detector 108. In a second, different, detection path there is arranged a second condenser lens 90 for focusing a detection radiation beam onto a second detector 88. The first and second detectors, shown by items 108 and 88 respectively, constitute a radiation detector arrangement for generating detector signals representing information detected in the radiation after interaction with the record carrier 82.

The first detection path is used for detection of radiation reflected from the SIL 80 and polarized perpendicular to the forward radiation beam that is focused on the record carrier. The perpendicularly polarized radiation is referred to as the RF ⊥ polarized signal. The gap (error) signal is derived from the low-frequency part (e.g. DC to 100 kHz) of the RF ⊥ polarized signal. The second detection path is used for detection of radiation that is polarized parallel to the forward radiation beam that is focused on the record carrier and is modulated by the information read from the information layer. The portion of light in the second detection path that is detected by the second detector 88 is referred to as the RF // polarized signal and is used for data signal generation and tracking signal generation such as for example a push-pull signal and is used to generate a signal representing the transverse distance between the spot and the center of the data track of the record carrier 82 to be followed. An alternative way to obtain a gap error signal is by changing the polarization from the linear state as emitted by the laser to a circular state by passing the laser beam through a quarter wave plate. This beam is then used to illuminate the lens. Subsequently, a part of the reflected beam is detected with a polarization state parallel to that of the initial polarization state of the laser, after passing the reflected beam through a quarter wave plate.

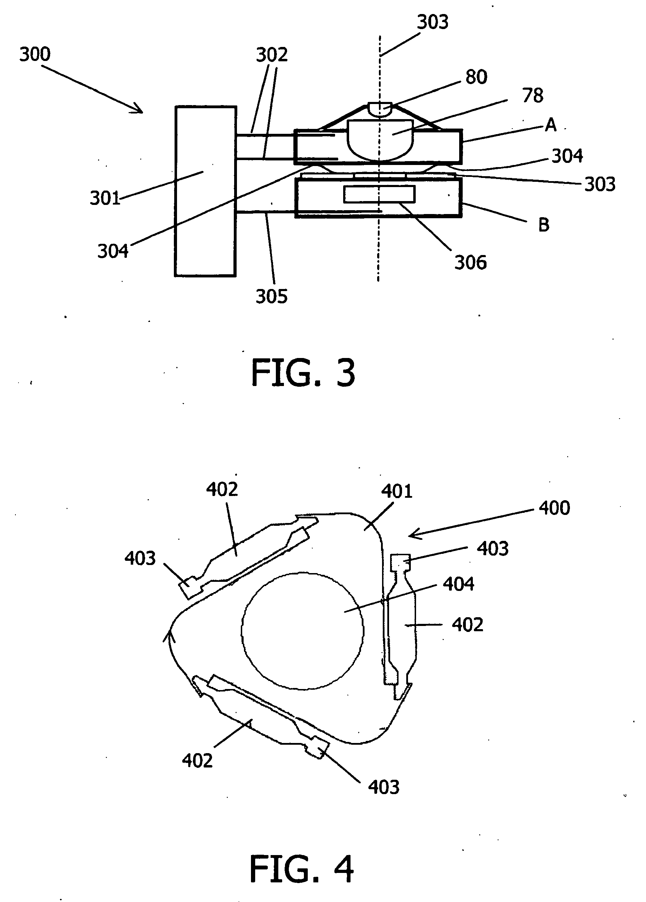

Figure 3 schematically shows an example of an actuator 300 for the objective lens system (78, 80) and one or more optical elements according to a first embodiment of the inventions. The actuator comprises two sections. The first section A comprises an objective lens system such as for example shown in Figure 1c and the second section B comprises an optical element 306. This optical element can be (as described earlier), for example, an (chromatic) aberration correction element based on non-periodic phase structures or liquid crystal cells. The first section A may be connected to the so-called fixed world 301 (e.g. the optical scanning device or actuator base) by conventional and known means 302 for actuators such as, for example, four wire springs. It is also possible that the actuator 300 is a rotary-type actuator in which section A is rotatable with respect to the fixed world by known means of a mechanical pivot, for example a shaft, or a virtual pivot. The displacements of the first section A in tracking and focus/air-gap direction can be controlled by means of a servo controller (not shown) using servo signals such as a gap error signal, tracking error signal and/or focusing signal. The actuation may be achieved by a driving means for displacing the first section in at least a first direction parallel to the optical axis of the objective system. Such driving means can make use of known techniques such as actuators using coils and permanent magnets (e.g. a Lorentz actuator) or (bimorph) piezo elements. The support frame as discussed in relation to Fig.2 may be integrated in the first section A.

Second section B comprises the optical element(s) that only needs to follow the optical axis 303 of the objective lens system in (for example) the radial direction with an accuracy that is much less than that of objective lens system to the tracks in the first section, e.g. in the order of micrometers instead of nanometers. The second section B is connected to the first section A by a connecting-means 303.

The optical element in the second section B of the actuator may be for example a chromatic aberration corrector such as a so-called non-periodic phase structure (NPS), or a spherical aberration corrector such as a liquid wavefront correcting cell for use during reading of multi information-layer optical record carriers (see also C. A. Verschuren , et al, "Near Field Recording on First-Surface Write-Once Media with a NA=1.9 Solid Immersion Lens", JJAP, Vol. 44, No. 5B, 2005, pp.3564-3567).

Such optical elements usually have a small off-axis tolerance with respect to the optical axis of the objective lens system, but have a large position tolerance along the optical axis. The off-axis position tolerances of these elements with respect to the optical axis of the objective lens are in many cases smaller than the radial stroke over which the actuator may have to move the objective lens during tracking due to eccentricity of the tracks on the record carrier. The optical element(s) may therefore remain aligned within a few micrometers (or more depending on the type of optical element) with the optical axis of the objective lens system during the radial displacement of that objective lens system.

The connecting-means 303 is designed such that it substantially decouples the dynamic behavior of the second section B from the first section A in the relevant frequency range and directions. It is then possible to achieve high bandwidth control of the first section suitable for a high bandwidth tracking and or focusing servo, while the second section remains within the limited displacement tolerance range in for example the radial (tracking direction) without substantially affecting the dynamic behavior of the first section. For this the connecting means 303 comprises a resilient member 304 that keeps the second section B resiliently in position with respect to the objective lens system in the first section A. The resilient member 304 comprises at least one flexible element in the connection between the first section A and the second section B. Such a flexible element can be for example a wire spring or a leaf spring. The flexible element has preferably an appropriate stiffness in one or more directions. The flexible element has a first spring constant k_{z} in a first direction, a second spring constant kₓ in a second direction perpendicular to the first direction and a third spring constant ky in a third direction perpendicular to the first and second direction. The first direction is likely to be considered as the focus / gap-width direction, while the second direction may be any direction perpendicular to this first direction. For convenience the second direction may be chosen in the radial tracking direction, which then results in the third direction to be in the tangential direction.

The value of these spring constants depend on the design and orientation of the one or more flexible elements and can be calculated by known mechanical and mathematical techniques. When more than one flexible element is used, they preferably have equal spring constants in the relevant effective direction.

The resilient member 304 may have a low stiffness or spring constant κ_{z}, (κᵢ is the effective sum of spring constants of the at least one flexible element of the resilient member in the i-direction with 'i' being x, y or z), in the first direction and a higher stiffness or spring constant κ_{y} in the second direction perpendicular the first direction. This low stiffness in the first direction lowers the effective mass to be driven or actuated in that direction above a certain frequency, thereby allowing a higher bandwidth for the first section and reducing the power consumption in the actuator. Due to the low stiffness in the first direction, the second section B will be much less displaced in that direction than the actuated first section above that frequency (decoupled). The higher stiffness in the second direction (or e.g. radial direction) results in that the second section is closely following the displacements of the first section in that second direction. In this embodiment the first spring constant κ_{z} is preferably less than one fifth of the second spring constant κₓ, and even more preferably the first spring constant κ_{z} is less than one tenth of the second spring constant κₓ.

The second section may also be connected to the fixed world 301 by, for example, wire springs. In the embodiment as shown in Fig. 3 only one of two wire springs 305 is shown. In comparison with the four wire springs that connect the first section A to the fixed world 301, the resilient member 304 of the connecting-means 303 replaces the other two wire springs.

Preferably the resilient member 304 is designed such that tilting of the second section B with respect to the first section A is avoided. For that reason the connection(s) between the sections A and B is (are) preferably located symmetrically around an axis through the center of mass of the second section B and parallel to the optical axis. In this way a tilt of section B is avoided when low frequency displacements in focus / air gap direction are made. It is also preferred that the connection(s) of the resilient member 304 with the second section B is (are) close to the center of mass of section B. The forces and momentums may then be small enough to avoid a tilt of second section B by low frequency displacements of section A.

Preferably, the ratio of the mass M_{B} of the second section B and the spring constants κ_{z} of the resilient member in the first direction is chosen such that a first resonance frequency in the focus direction F_{ret-z} is smaller than the functional rotational frequency Fᵣₒₜ of the optical record carrier in the data drive for which the optical system is designed. Even more preferably, the first resonance frequency is below the minimum rotation frequency of the optical record carrier as applied during scanning. This first resonance frequency may be written as F_{res-z} = *(1*/*2*π*)*√*(*κ*_{z}lM_{B})*.

In this way the mass of second section B is dynamically decoupled from first section A in the focus/air gap direction beyond the record carrier rotation frequency. In this way the actuator mainly needs to displace and/or accelerate the mass of section A in the focus air gap direction during the scanning of an optical record carrier in an optical data drive. This scanning can be reading and/or writing in such an optical recording system as an optical data drive.

The second section B is in such case allowed to hold a larger mass or have a much lower bandwidth than that of the first section. By splitting the actuator in two sections it is easier to achieve a high bandwidth performance of the first section comprising the objective lens system. Substantially no additional mass than the mass of section A has to be actuated at high bandwidth.

The first section A of the actuator can then be driven by a high bandwidth (e.g. several kHz) servo controller in the focus/gap direction. The residual control error in the gap width (air gap) direction of the first section A of a few nanometers, as required for correct recording on and/or reading from an information layer of an optical record carrier, can now be achieved more easily than when there is a tight, stiff connection between both actuator sections.

Figure 4 schematically shows a detail of an example of a connecting-means 400 according to an embodiment of the invention. For example, the second section A may be connected to the first section B using a resilient member having one (or more) set(s) of leaf springs 402 that provide a large stiffness in the radial direction but that are flexible in the focus/air gap direction. In this example, the connecting-means 400 only consist of the resilient member. In general the connecting-means 400, may also comprise other mechanical elements, for example a ring on which the flexible elements are mounted. The number of leaf springs can be one or two but preferably at least three, as this will have an additional benefit with respect to tilt of section B. The rigid body 401 of the connecting-means is mechanically fixed to the second section B, while the end parts 403 of the leaf springs are mechanically fixed to the first section A, or vice versa. By applying preferably at least three leaf springs it is possible to achieve a tilting stiffness in two directions (for example, in the tangential and radial direction of the optical record carrier to be scanned). Even more preferable the leaf springs are connected close to the center of mass of second section. A combination of at least three leaf springs connected close to the center of mass of the second section B is the most preferable. The hole 404 in the connecting-means allows passage of a radiation beam towards the objective lens system in the second section A.

The material of the "flat frame" connecting-means 400 can be a resilient material or flexure, such as, for example, thin metal foil, plastic sheet, multilayer carbon fiber sheet having stiffness in for example one direction and flexibility in another direction; it may also be that the connecting means comprises a combination of such sub elements of different materials.

The connecting-means 400 may be used as the connecting-means 303 in Fig. 3. The rigid body 401 may have minimal dimensions just sufficient to integrate the one or more flexible elements, such as leaf springs, into a single component that can be handled more easily during assembly than separate flexible elements.

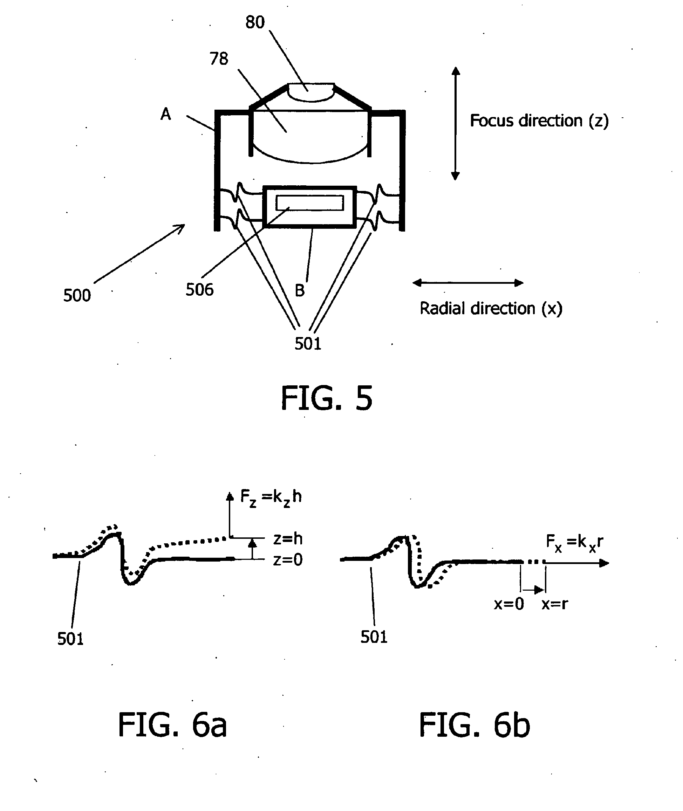

In Figure 5 a second embodiment of the invention is schematically shown. This second embodiment may further improve the dynamic performance of the first section A in the actuator head 500 by also relaxing the stiffness of the springs 501 in the radial direction. First section A is mounted to the fixed world in conventional manners making use of, for example, wire springs (see also Figure 3) or by other conventional means as applied for rotary-type objective lens actuators. First section A again comprises the objective lens system (78, 80) and second section B an optical element 506 which needs to follow the objective lens system within certain tolerances in the three directions x, y and z).

By choosing also a small stiffness (a low spring constant κₓ) of the resilient member 501 in the radial direction, the second section B can be dynamically decoupled from the first section A in both radial and focus/air-gap direction. The decoupling in the radial direction is above a certain second resonance frequency Fᵣₑₛ₋ₓ of the second section in a radial direction. This second resonance frequency can be written as Fᵣₑₛ₋ₓ = *(1*/*2*π*)*-√*(*κ*ₓ*/*M_{B})*.

Due to the low stiffness in the first and second direction in this embodiment the second section B will be much less displaced in those directions than the actuated first section in those directions. By choosing a higher stiffness in the third direction (or e.g. tangential direction) it is possible to avoid displacements of the second section to the first section in that third direction. In this embodiment the first spring constant κ_{z} and second spring constant κₓ are preferably less than one fifth of the second spring constant κ_{y} and even more preferably the first spring constant κ_{z} and second spring constant κₓ are less than one tenth of the third spring constant κ_{y}.

Again, this resonance frequency Fᵣₑₛ₋ₓ is preferably chosen below the functional rotation frequency of the optical record carrier as applied during scanning. Even more preferably, the second resonance frequency is below the minimum rotation frequency of the optical record carrier as applied during scanning. In this way the mass M_{B} of second section B decouples from the first section A both in the radial and focus/air gap direction at frequencies beyond the record carrier rotation frequency. Thus, for frequencies beyond the resonance frequency of the second section B the actuator needs to accelerate less mass, mainly the mass of section A. In this case there is a mass-benefit in both radial and focus/air gap direction. In this example configuration, the second section B is mounted inside the first section A using e.g. springs 501 that are, for example, as shown schematically in Figures 6a and 6b by springs 501, flexible in radial and focus/air gap directions and stiff in the other directions. The springs 501 may be wire springs, but are preferably leaf springs in order to obtain stiffness in the direction perpendicular to the radial and focus/airgap direction (e.g. the tangential direction).

The resilient member may comprise for example a thin metal foil 501, as shown in Figure 6a and 6b, that is shaped such that it exhibits a spring function with a low stiffness (or spring constant) k_{z}, kₓ in two perpendicular directions 'z' (Fig. 6a) and 'x' (Fig. 6b), e.g. in the air gap and radial direction, while it may have a higher stiffness (or spring constant) k_{y} in the other perpendicular direction 'y' (not shown). This higher stiffness of the spring should prevent the second section B from moving in the direction 'y' with respect to the first section A. The resonance frequencies F_{res-z} in the z-direction and Fᵣₑₛ₋ₓ in the x-direction are preferably both below the minimum functional record carrier rotation frequency that will be used in the data drive in which the optical scanning device using an optical pickup actuator according to the invention is to be applied.

The second embodiment has the advantage that the first section A of the actuator can then be driven by a high bandwidth (e.g. several kHz) servo controller in the focus/gap direction as well as and/or the radial (tracking) direction.

Preferably, tilting of the second section B is avoided by connecting the leaf springs in such a way that forces (F_{z}, Fₓ) introduced by an actuated first section A are applied close to and preferably in the center of mass of the second section. In such a situation (balanced) the application of just two leaf springs would suffice. In other situations it may be useful to apply more than two leaf springs, for example four leaf springs, to avoid tilting of the second section B within the actuated first section A.

It is evident that in the above description resilient members or flexures using flexible elements other than leaf or wire springs can be used. It may also be that the resilient member comprises separate leaf springs or wire springs. The combination of such separate flexible elements, such as leaf- or wire springs, may then be referred to as a resilient member. Also a single flexible element (e.g. a single leaf spring) may function as the resilient member or even connecting means. The resilient member may be made of plastic(s), metal(s) or a combination thereof. The leaf springs or wire springs may also be made of plastic, metal or a combination thereof. Preferably, the plastic used is a thermoplastic or mix of thermoplastics because of the damping properties. Preferably, the metal is a non-magnetic material such as non-magnetic stainless steel or phosphor bronze, as then the movements of the metal elements and thus sector section B is not affected by, for example, the magnetic field when used in a Lorenz actuator. Although the invention has been described in relation to near-field optical storage applications it is obvious that the invention can also be used for other applications in which an optical element is or optical elements are to be actuated with high bandwidth requirements.

## Claims

1. An optical pickup actuator (300) for an optical scanning device for scanning an optical record carrier (82), the optical pickup actuator comprising, an actuator base (301), in a first section (A) an objective lens (78) and a solid immersion lens (80) having an optical axis (303), the first section being connected to the actuator base by connection means (302), a driving means for displacing the first section in at least a first direction parallel to the optical axis, and in a second section (B) an optical element (306, 506), the second section connected to the first section by a connecting-means (303, 400), **characterized in that** the connecting-means is comprising a resilient member (304, 402, 501) having a first spring constant κ_{z} in the first direction such that a resonance frequency F_{res-z} of the second section in the first direction is smaller than a resonance frequency of the first section in the first direction such that the dynamic behavior of the second section in the first direction is decoupled from the dynamic behavior of the first section in the first direction.

2. The optical pickup actuator according to claim 1, further **characterized in that** the resilient member comprises at least one leaf spring.

3. The optical pickup actuator according to claim 1, further **characterized in that** the resilient member comprises at least one wire spring.

4. The optical pickup actuator according to claim 1, the resilient member further having a second spring constant κₓ in a second direction perpendicular to the first direction, **characterized in that** the first spring constant κ_{z} is smaller than the second spring constant κₓ.

5. The optical pickup actuator according to claim 1, further comprising a driving means for displacing the first section (A) in a second direction perpendicular to the first direction, the resilient member having a second spring constant κₓ in the second direction perpendicular to the first direction and a third spring constant κ_{y} in a third direction perpendicular to the first and second direction, **characterized in that** the first spring constant κ_{z} and second spring constant κₓ are smaller than the third spring constant κ_{y}.

6. An optical read and/or write system comprising an optical pickup actuator according to any one of the preceding claims.

7. An optical read and/or write system according to claim 6, the optical read and/or write system being arranged to rotate an optical record carrier (82) at a minimum functional rotational frequency, the second section (B) having a mass M_{B} and the resilient member having a first spring constant κ_{z} in the first direction, **characterized in that** the ratio of the mass M_{B} and first spring constant κ_{z} is such that a first resonance frequency F_{res-z} of the second section in the first direction is less than the minimum functional rotational frequency.

8. An optical read and/or write system according to claim 7, further comprising a driving means for displacing the first section (A) in a second direction perpendicular to the first direction, the resilient member having a second spring constant κₓ in a second direction different perpendicular to the first direction, **characterized in that** the ratio of the mass M_{B} and second spring constant κₓ is such that a second resonance frequency Fᵣₑₛ₋ₓ of the second section in the second direction is less than the minimum functional rotational frequency.

## Patentansprüche

1. Optischer Aufnahmeaktuator (300) für eine optische Abtasteinrichtung zum Abtasten eines optischen Aufzeichnungsträgers (82), wobei der optische Aufnahmeaktuator Folgendes umfasst: eine Aktuatorbasis (301), in einem ersten Teil (A) eine Objektivlinse (78) und eine massive Immersionslinse mit einer optischen Achse (303), wobei der erste Teil mit Hilfe von Verbindungsmitteln (302) mit der Aktuatorbasis verbunden ist, ein Antriebsmittel zum Verlagern des ersten Teils in wenigstens einer ersten Richtung parallel zu der optischen Achse, und in einem zweiten Teil (B) ein optisches Element (306, 506), wobei der zweite Teil mit Hilfe eines Verbindungsmittels (303, 400) mit dem ersten Teil verbunden ist, **dadurch gekennzeichnet, dass** das Verbindungsmittel ein elastisches Element (304, 402, 501) mit einer ersten Federkonstanten K_{Z} in der ersten Richtung aufweist, so dass eine Resonanzfrequenz F_{res-Z} des zweiten Teils in der ersten Richtung kleiner ist als eine Resonanzfrequenz des ersten Teils in der ersten Richtung, so dass das dynamische Verhalten des zweiten Teils in der ersten Richtung von dem dynamischen Verhalten des ersten Teils in der ersten Richtung abgekoppelt ist.

2. Optischer Aufnahmeaktuator nach Anspruch 1, weiterhin **dadurch gekennzeichnet, dass** das elastische Element wenigstens eine Blattfeder aufweist.

3. Optischer Aufnahmeaktuator nach Anspruch 1, weiterhin **dadurch gekennzeichnet, dass** das elastische Element wenigstens eine Drahtfeder aufweist.

4. Optischer Aufnahmeaktuator nach Anspruch 1, wobei das elastische Element weiterhin eine zweite Federkonstante K_{X} in einer zweiten Richtung, senkrecht zu der ersten Richtung aufweist, **dadurch gekennzeichnet, dass** die erste Federkonstante K_{Z} kleiner ist als die zweite Federkonstante K_{X}.

5. Optischer Aufnahmeaktuator nach Anspruch 1, weiterhin mit einem Antriebsmittel zum Verlagern des ersten Teils (A) in einer zweiten Richtung senkrecht zu der ersten Richtung, wobei das elastische Element eine zweite Federkonstante K_{X} in der zweiten Richtung senkrecht zu der ersten Richtung aufweist, sowie eine dritte Federkonstante K_{Y} in einer dritten Richtung senkrecht zu der ersten und zweiten Richtung, **dadurch gekennzeichnet, dass** die erste Federkonstante K_{Z} und die zweite Federkonstante K_{X} kleiner sind als die dritte Federkonstante K_{Y}.

6. Optisches Lese- und/oder Schreibsystem mit einem optischen Aufnahmeaktuator nach einem der vorstehenden Ansprüche.

7. Optisches Lese- und/oder Schreibsystem nach Anspruch 6, das weiterhin einen optischen Aufzeichnungsträger (82) aufweist, vorgesehen zum Drehen mit einer minimalen funktionellen Drehgeschwindigkeit, wobei der zweite Teil (B) eine Masse M_{B} und das elastische Element mit einer ersten Federkonstante K_{Z} in der ersten Richtung aufweist, **dadurch gekennzeichnet, dass** das Verhältnis der Masse M_{B} zu der ersten Federkonstanten K_{Z} derart ist, dass eine erste Resonanzfrequenz F_{res-Z} des zweiten Teils in der ersten Richtung kleiner ist als die minimale funktionelle Rotationsfrequenz.

8. Optisches Lese- und/oder Schreibsystem nach Anspruch 7, weiterhin mit einem Antriebsmittel zum Verlagern des ersten Teils (A) in einer zweiten Richtung senkrecht zu der ersten Richtung, wobei das elastische Element eine zweite Federkonstante K_{X} in einer zweiten Richtung senkrecht zu der ersten Richtung aufweist, **dadurch gekennzeichnet, dass** das Verhältnis der Masse M_{B} zu der zweiten Federkonstante K_{X} derart ist, dass eine zweite Resonanzfrequenz F_{res-X} des zweiten Teils in der zweiten Richtung kleiner ist als die minimale funktionelle Rotationsfrequenz.

## Revendications

1. Actionneur optique de prise (300) pour un dispositif optique de balayage afin de balayer un support optique d'enregistrement (82), l'actionneur optique de prise comprenant une base d'actionneur (301), dans une première section (A) une lentille d'objectif (78) et une lentille solide d'immersion (80) ayant un axe optique (303), la première section étant reliée à la base d'actionneur par des moyens de connexion (302), des moyens d'entraînement pour déplacer la première section dans au moins une première direction qui est parallèle à l'axe optique, et dans une deuxième section (B) un élément optique (306, 506), la deuxième section étant reliée à la première section par des moyens de connexion (303, 400), **caractérisé en ce que** les moyens de connexion comprennent un organe résilient (304, 402, 501) ayant une première constante de ressort κ_{z} dans la première direction de telle façon qu'une fréquence de résonance F_{res-z} de la deuxième section dans la première direction soit inférieure à une fréquence de résonance de la première section dans la première direction, de sorte que le comportement dynamique de la deuxième section dans la première direction est découplé du comportement dynamique de la première section dans la première direction.

2. Actionneur optique de prise selon la revendication 1, **caractérisé** encore en ce que l'organe résilient comprend au moins un ressort à lames.

3. Actionneur optique de prise selon la revendication 1, **caractérisé** encore en ce que l'organe résilient comprend au moins un ressort à fil.

4. Actionneur optique de prise selon la revendication 1, l'organe résilient ayant en outre une deuxième constante de ressort κₓ dans une deuxième direction qui est perpendiculaire à la première direction, **caractérisé en ce que** la première constante de ressort κ_{z} est inférieure à la deuxième constante de ressort κₓ.

5. Actionneur optique de prise selon la revendication 1, comprenant encore des moyens d'entraînement pour déplacer la première section (A) dans une deuxième direction qui est perpendiculaire à la première direction, l'organe résilient ayant une deuxième constante de ressort κₓ dans la deuxième direction qui est perpendiculaire à la première direction, et une troisième constante de ressort κ_{y} dans une troisième direction qui est perpendiculaire à la première et à la deuxième direction, **caractérisé en ce que** la première constante de ressort κ_{z} et la deuxième constante de ressort κₓ sont inférieures à la troisième constante de ressort κ_{y}.

6. Système optique de lecture et/ou d'écriture comprenant un actionneur optique de prise selon l'une quelconque des revendications précédentes 1 à 5.

7. Système optique de lecture et/ou d'écriture selon la revendication 6, comprenant encore un support optique d'enregistrement (82) qui est agencé de manière à tourner à une fréquence de rotation fonctionnelle minimale, la deuxième section (B) ayant une masse M_{B} et l'organe résilient ayant une première constante de ressort κ_{z} dans la première direction, **caractérisé en ce que** le rapport de la masse M_{B} et de la première constante de ressort κ_{z} est tel de façon qu'une première fréquence de résonance F_{res-z} de la deuxième section dans la première direction soit inférieure à la fréquence de rotation fonctionnelle minimale.

8. Système optique de lecture et/ou d'écriture selon la revendication 7, comprenant encore des moyens d'entraînement pour déplacer la première section (A) dans une deuxième direction qui est perpendiculaire à la première direction, l'organe résilient ayant une deuxième constante de ressort κₓ dans une deuxième direction différente qui est perpendiculaire à la première direction, **caractérisé en ce que** le rapport de la masse M_{B} et de la deuxième constante de ressort κₓ est tel de façon qu'une deuxième fréquence de résonance Fᵣₑₛ₋ₓ de la deuxième section dans la deuxième direction soit inférieure à la fréquence de rotation fonctionnelle minimale.
